# EUROPEAN PATENT APPLICATION

(11) **EP 3 309 936 A1**
(43) Date of publication of application: **18.04.2018**
(21) Application number: 15894959.4
(22) Date of filing: 11.06.2015
(51) Int. Cl.: H02K 9/26

(54) **GAS DRYER FOR ROTATING ELECTRIC MACHINE**

(71) Applicant: Mitsubishi Electric Corporation, Chiyoda-ku Tokyo 100-8310 (JP)
(72) Inventor: TOHODA Yasuhiro, Tokyo 102-0073 (JP); FUJITA Tetsuhiro, Tokyo 102-0073 (JP)
(74) Representative: Sajda, Wolf E.
(86) International application number: PCT/JP2015/066910
(87) International publication number: WO 2016/199274

(57) **Abstract**

A gas dryer (100) of the invention, being a heaterless type of gas dryer (100) that carries out dehumidifying of hydrogen gas circulating in an interior of a rotating electrical machine (6), includes a drying tower (1) that causes moisture in the hydrogen gas to adsorb to a desiccant (2), and a funnel-form desiccant holding portion (13) disposed in an interior of the drying tower (1) and holding the desiccant (2), wherein the desiccant (2) is introduced into the desiccant holding portion (13) from an input valve (25) of an upper portion of the drying tower (1), and moist desiccant (2) is discharged from a discharge valve (26) of a lower portion of the drying tower (1). The desiccant holding portion (13) is configured of perforated metal, or the like, having ventilation, and is used as a partitioning plate that partitions the interior of the drying tower (1).

## Description

### Technical Field

The present invention relates to a rotating electrical machine gas dryer that removes moisture from a coolant gas caused to circulate in an interior of a rotating electrical machine in order to prevent condensation in the rotating electrical machine interior.

### Background Art

A hydrogen cooling method such that hydrogen gas is caused to circulate inside a rotating electrical machine is being employed in order to cool the rotating electrical machine. When the hydrogen gas circulated inside the rotating electrical machine contains moisture, the moisture causes condensation, because of which it is necessary to link a gas dryer to the rotating electrical machine, and carry out a dehumidifying of the hydrogen gas.

The gas dryer (hydrogen gas dryer) is such that hydrogen gas is caused to circulate inside the gas dryer by a pressure difference caused by an action of a fan installed on a rotor of the rotating electrical machine. Further, the gas dryer carries out a dehumidifying operation of removing the moisture in the hydrogen gas using a desiccant that fills an interior of a drying tower of the gas dryer.

When the desiccant adsorbs a certain amount or more of moisture, a pipe connecting the gas dryer and rotating electrical machine is closed, an electric heater installed in an interior of the drying tower is started up, air introduced into the drying tower from a blower installed on the exterior is heated, and the moisture in the desiccant is removed by the heated air being fed into the desiccant.

Also, as indicated in a plurality of related art documents, there is also a gas dryer such that the moisture in the desiccant is removed by evacuating the interior of the drying tower in addition to heating with the electric heater (for example, refer to Patent Document 1, Patent Document 2, and Patent Document 3).

However, an existing rotating electrical machine gas dryer is of a configuration such that a valve of the pipe is switched, or the like, with the desiccant still disposed in the drying tower, the desiccant is heated, and the moisture is discharged to the exterior.

### List of Citations

### Patent Literature

| | |
|---|---|
| Patent Document 1: | JP 61 -54 841 A |
| Patent Document 2: | JP 64-77 445 A |
| Patent Document 3: | JP 8-331 808 A |

### Summary of the Invention

### Technical Problem

The existing methods are such that dehumidifying of the desiccant is carried out by heating with an electric heater. When a gas dryer hydrogen gas dehumidifying operation is carried out, however, the interior of the drying tower in which the desiccant is disposed reaches a state of being filled with hydrogen gas.

Therefore, when carrying out an operation of dehumidifying the desiccant by heating with a heater, it is necessary to discharge the hydrogen gas from the interior of the drying tower, and take a countermeasure against explosion.

Also, measures such as carrying out an operation of shifting timings of opening and closing an isolation valve so that the hydrogen gas and the heated heater do not come into contact, purging hydrogen gas remaining inside the drying tower with an inert gas, or evacuating the inside of the drying tower, are carried out as anti-explosion measures.

Also, there is also technology such that a valve switching operation is automated, but there are problems in that control is complicated, and a large amount of labor is needed for maintenance.

Also, as a still greater problem, there are reported examples of the hydrogen gas inside the drying tower escaping to the exterior via a blower owing to an interlocking selector valve being operated, and causing a fire.

Also, in order to install a gas dryer that carries out hydrogen gas dehumidifying in a designated explosion-proof area, it is necessary that all of the electrical items are special hydrogen gas explosion-proof articles, and furthermore, that a structure and circuit configuration are such that the hydrogen gas does not escape to the exterior.

In view of these points, an existing gas dryer in which a heater is used is such that there is a danger of explosion or fire occurring, and installation in a designated explosion-proof area is difficult.

The invention, having been contrived in order to resolve the heretofore described kind of problem, has an object of providing a rotating electrical machine gas dryer with a heaterless structure, wherein there is no danger of explosion or fire occurring.

### Solution to the Problem

A rotating electrical machine gas dryer according to the invention includes:
a drying tower into which hydrogen gas circulating in an interior of a rotating electrical machine is conducted and which causes moisture in the hydrogen gas to be adsorbed to a desiccant;
a funnel-form desiccant holding portion disposed in an interior of the drying tower and holding the desiccant;
an input valve provided in an upper portion of the drying tower and introducing the desiccant into the desiccant holding portion; and
a discharge valve provided in a lower portion of the drying tower and discharging the desiccant to an exterior, and is characterized in that the desiccant holding portion is formed of a member having ventilation.

Also, a rotating electrical machine gas dryer according to the invention includes: a drying tower into which hydrogen gas circulating in an interior of a rotating electrical machine is conducted and which causes moisture in the hydrogen gas to be adsorbed to a desiccant, and a handle-equipped desiccant holding portion disposed in an interior of the drying tower and holding the desiccant, and is characterized in that the desiccant holding portion is formed of a member having ventilation, a lid portion provided in an upper portion of the drying tower is opened, and a removal and insertion of the desiccant holding portion is carried out.

### Advantageous Effects of Invention

According to the rotating electrical machine gas dryer of the invention, a dried desiccant can be introduced from an upper portion of a drying tower into a desiccant holding portion disposed in the drying tower, and when the desiccant absorbs moisture, the desiccant can be discharged under the weight of the desiccant itself by opening a discharge valve of the drying tower, because of which a replacement of the desiccant in the drying tower can be carried out easily, without using a heater.

Also, according to the rotating electrical machine gas dryer of the invention, a handle-equipped desiccant holding portion that holds a desiccant can be removed and inserted by opening a lid portion provided in an upper portion of a drying tower and operating the handle, because of which a replacement of the desiccant can be carried out easily, without using a heater.

The foregoing and other objects, features, aspects and advantages of the invention will become more apparent from the following detailed description of the invention when taken in conjunction with the accompanying drawings.

### Brief Description of Drawings

FIG. 1 is a system diagram including a rotating electrical machine gas dryer according to a first embodiment of the invention.
FIG. 2 is a main portion sectional side view of a drying tower of the gas dryer according to the first embodiment of the invention.
FIG. 3 is a sectional side view of a desiccant holding portion according to the first embodiment of the invention.
FIG. 4 is a main portion sectional side view of a drying tower of a gas dryer according to a second embodiment of the invention.
FIG. 5 is a sectional side view of a desiccant holding portion according to the second embodiment of the invention.
FIG. 6 is a main portion sectional side view of a drying tower of a gas dryer according to a third embodiment of the invention.
FIG. 7 is a sectional side view of a desiccant holding portion according to the third embodiment of the invention.
FIG. 8 is a main portion sectional side view of a drying tower of a gas dryer according to a fourth embodiment of the invention.
FIG. 9 is a sectional side view of a hollow member disposed in an interior of the drying tower according to the fourth embodiment of the invention.
FIG. 10 is a main portion sectional side view of a drying tower of a gas dryer according to a fifth embodiment of the invention.
FIG. 11 is an illustration showing circulation of hydrogen gas in an interior of the drying tower according to the fifth embodiment of the invention.
FIG. 12 is a main portion sectional side view of a drying tower of a gas dryer according to a sixth embodiment of the invention.
FIG. 13 discloses an upper surface portion and sectional side views of a desiccant holding portion according to the sixth embodiment of the invention.

### Description of Embodiments

### First Embodiment

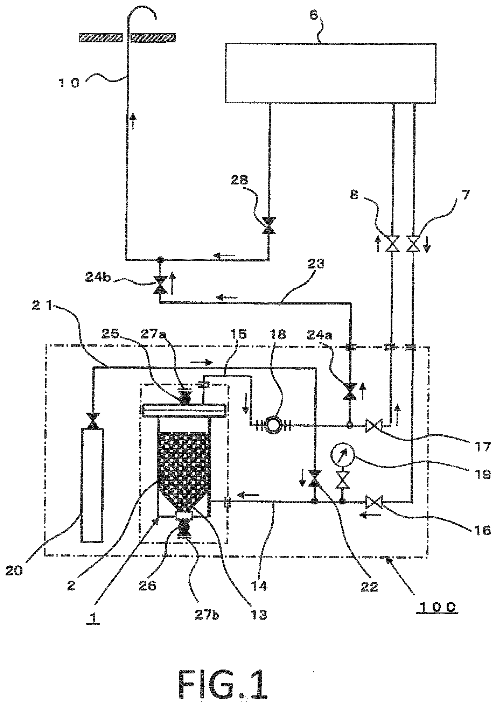

Hereafter, referring to FIG. 1 to FIG. 3, a rotating electrical machine gas dryer according to a first embodiment of the invention will be described. FIG. 1 is a system diagram including a gas dryer 100 of a rotating electrical machine 6. In FIG. 1, a configuration is such that hydrogen gas containing moisture that circulates inside the rotating electrical machine 6 is introduced into the gas dryer 100 via a pipe, the moisture is removed, and the hydrogen gas returns to the rotating electrical machine 6.

As shown in FIG. 1, the gas dryer 100 of the first embodiment is of a heaterless structure wherein no heater that heats a desiccant 2 is included in the system of the gas dryer 100. Further, the gas dryer 100 of the invention is a total replacement type wherein the desiccant 2, which is activated alumina, or the like, that adsorbs moisture in the hydrogen gas and reaches a saturated state, is discharged by a valve in a lower portion of a drying tower 1 being opened, and another dried desiccant 2 is introduced into an interior of the drying tower 1 by a valve in an upper portion of the drying tower 1 being opened.

As shown in FIG. 1, the gas dryer 100 of the first embodiment is such that, when carrying out a hydrogen gas dehumidifying operation, the interior of the drying tower 1 is filled with the desiccant 2, and dehumidifying of the hydrogen gas is carried out by moisture in the hydrogen gas being caused to adsorb to the desiccant 2.

The configuration is such that the hydrogen gas is circulated to the gas dryer 100 by a pressure difference occurring in the interior of the rotating electrical machine 6 in accompaniment to an operation of the rotating electrical machine 6.

When the desiccant 2 is replaced, the rotating electrical machine 6 and gas dryer 100 are cut off by a local supply valve 7 and local return valve 8, which are isolation valves.

The gas dryer 100 is of a configuration that has the drying tower 1 as a main portion, and also includes a purging inert gas cylinder 20 and the like. Also, a discharge pipe 10 is provided in order to discharge gas from the gas dryer 100 or rotating electrical machine 6 to an exterior (outside).

A funnel-form desiccant holding portion 13 that holds the desiccant 2 is disposed inside the drying tower 1. Further, the desiccant holding portion 13 is such that a conical surface portion that forms a main portion and receives the desiccant 2 is formed of a ventilation plate, for example, perforated metal, having air permeability.

Also, the desiccant holding portion 13 performs a role of a partitioning plate inserted into the drying tower 1, whereby the inside of the tower is divided by the partition into a region in which the desiccant 2 is accumulated and a ventilation region in which the hydrogen gas is led to the desiccant 2.

Herein, when carrying out a hydrogen gas dehumidifying operation, the interior of the drying tower 1 is compartmentalized into three regions. The three regions are a region in which the desiccant 2 is disposed, a ventilation region (space) into which moist hydrogen gas is supplied and the hydrogen gas fed to the desiccant 2, and a ventilation region (space) to which dried hydrogen gas that has passed through the desiccant 2 is fed.

Also, a hydrogen gas inlet pipe 14 is a pipe for causing moist hydrogen gas to flow from the rotating electrical machine 6 into the drying tower 1, and a hydrogen gas outlet pipe 15 is a pipe for causing hydrogen gas dried in the drying tower 1 to flow out, and is eventually connected to the rotating electrical machine 6.

A dryer-incorporated supply valve 16 is a valve provided in the hydrogen gas inlet pipe 14 in order to increase safety, and is disposed between the local supply valve 7 and drying tower 1, and the configuration is such that the rotating electrical machine 6 and gas dryer 100 can be doubly isolated by the local supply valve 7 and dryer-incorporated supply valve 16.

Also, a dryer-incorporated return valve 17 is disposed between the local return valve 8 of the hydrogen gas outlet pipe 15 and the drying tower 1, and a configuration is such that the rotating electrical machine 6 and gas dryer 100 can be doubly isolated by the local return valve 8 and dryer-incorporated return valve 17.

A drying indicating agent receptacle 18 connected to the hydrogen gas outlet pipe 15 is a receptacle that houses a drying indicating agent whose color phase changes in accordance with an amount of moisture in hydrogen gas coming out of the drying tower 1, is installed on an outlet side of the drying tower 1, and ascertains an extent of moisture adsorbed by the desiccant 2.

A pressure gauge 19 connected to the hydrogen gas inlet pipe 14 measures a hydrogen gas pressure inside the gas dryer 100.

The inert gas cylinder 20 is a cylinder that supplies inert gas from an inert gas supply pipe 21 through an inert gas supply valve 22 into the drying tower 1, and can carry out a purge whereby hydrogen gas remaining inside the drying tower 1 is expelled by the supplied inert gas.

Herein, a purging pipe 23 disposed from the gas dryer 100 to the exterior is connected to the discharge pipe 10. The purging pipe 23 is a pipe connected in order to discharge a mixed gas of hydrogen gas and inert gas from the discharge pipe 10 to the exterior when hydrogen gas in the drying tower 1 is released and the pressure lowered, and when hydrogen gas in the drying tower 1 is purged. The purging pipe 23 can isolate a space between opened ends of the gas dryer 100 and discharge pipe 10 with duplicate purge valves 24a and 24b.

Carbon dioxide gas or nitrogen gas can be used as the inert gas used for purging, and these gases are suitable for use owing to being easy to obtain and low in price.

Also, an input valve 25 (upper ball valve) is installed in an upper portion of the drying tower 1 of the gas dryer 100, and the input valve 25 can be opened and dried desiccant 2 introduced into the drying tower 1. Further, a discharge valve 26 (lower ball valve) is installed in a lower portion of the drying tower 1, and the discharge valve 26 can be opened, and moist desiccant 2 caused to drop naturally under the weight of the desiccant 2 itself, and discharged to the exterior.

Herein, a configuration is such that a blind flange 27a is attached to the input valve 25 and a blind flange 27b attached to the discharge valve 26, whereby reliability of preventing a hydrogen gas leak from the drying tower 1 is increased.

A gas discharge valve 28 of the rotating electrical machine 6 is connected to the discharge pipe 10 without passing through the gas dryer 100.

Next, an operation of the gas dryer 100 of the rotating electrical machine 6 will be described. Hydrogen gas, which is a coolant gas of the rotating electrical machine 6, circulates inside the rotating electrical machine 6, thereby cooling the inside of the rotating electrical machine 6.

Moisture originating from moisture remaining inside the rotating electrical machine 6 when the rotating electrical machine 6 is assembled, from seal oil for confining the hydrogen gas inside the rotating electrical machine 6, or the like, is contained in the hydrogen gas. Moisture being mixed with the hydrogen gas is a cause of reducing efficiency of the rotating electrical machine 6.

Therefore, moisture in the hydrogen gas is removed by the desiccant 2 inside the drying tower 1 by the drying tower 1 being connected to the rotating electrical machine 6 with piping, and the hydrogen gas being caused to circulate to the drying tower 1.

According to the gas dryer 100 configured as heretofore described, a hydrogen gas dehumidifying operation (drying operation) whereby hydrogen gas circulating inside the rotating electrical machine 6 is dehumidified is carried out as follows.

Moist hydrogen gas discharged from the rotating electrical machine 6 flows through the local supply valve 7 and hydrogen gas inlet pipe 14 into the interior of the drying tower 1, is supplied from a lower portion of the drying tower 1, flows upward inside the drying tower 1, passes through gaps between particles of the desiccant 2, and flows to the hydrogen gas outlet pipe 15 side while being dehumidified. The dried hydrogen gas that has flowed to the outlet side of the drying tower 1 returns to the rotating electrical machine 6 via the local return valve 8.

When such a drying operation is carried out, the hydrogen gas circulates along a path isolated from the discharge pipe 10 and the inert gas cylinder 20, to be described hereafter.

When the desiccant 2 absorbs moisture and reaches a saturated state, a change occurs in the color phase of the drying indicating agent receptacle 18. This color phase change is a sign informing of a timing of refreshing the desiccant 2. Refreshing of the desiccant 2 is carried out by a total replacement of the desiccant 2 whereby dried desiccant 2 is introduced into the drying tower 1 after the desiccant 2 that has absorbed moisture is discharged from the drying tower 1.

Therefore, in order to stop the introduction of hydrogen gas into the drying tower 1 when replacing the desiccant, the local supply valve 7 and dryer-incorporated supply valve 16 installed in the inlet circuit of the drying tower 1, and the local return valve 8 and dryer-incorporated return valve 17 installed in the outlet circuit, are closed, thereby cutting off the drying tower 1 and rotating electrical machine 6, and temporarily stopping the hydrogen gas dehumidifying.

Next, the purge valves 24a and 24b are opened in order to remove the hydrogen gas inside the gas dryer 100 and lower the pressure, and an indicator of the pressure gauge 19 reaching zero is confirmed.

Subsequently, a cylinder valve of the inert gas cylinder 20 is opened slightly, the inert gas is introduced from the inert gas supply pipe 21 through the inert gas supply valve 22 into the drying tower 1, and purging is carried out by the hydrogen gas inside the drying tower 1 being discharged from the discharge pipe 10 to the exterior via the purge valve 24a, purging pipe 23, and purge valve 24b.

A supply time of the inert gas is in the region of three to five minutes, and when the time elapses, the cylinder valve of the inert gas cylinder 20 and the inert gas supply valve 22 are closed in order to stop the supply of the inert gas.

Subsequently, the following work is carried out in order to replace the desiccant 2. A receptacle of in the region of 20 liters is placed below the discharge valve 26, and the blind flange 27b is removed.

Subsequently, the discharge valve 26 is fully opened, and it is confirmed that the moist desiccant 2 drops naturally into the receptacle. Further, when the whole amount of the desiccant 2 inside the drying tower 1 has been discharged, the discharge valve 26 is closed, and the blind flange 27b is attached as before.

Next, the blind flange 27a in the upper portion of the drying tower 1 is removed, and the input valve 25 is opened. A jig (for example, a hopper) for introducing new desiccant 2 (dried desiccant) is attached above the input valve 25, and a necessary amount of the new desiccant 2 is introduced into the interior of the drying tower 1 via the jig.

When a predetermined amount of the desiccant 2 has been introduced, the total replacement of the desiccant 2 is completed by removing the jig, closing the input valve 25, and attaching the blind flange 27a.

Subsequently, after fully closing the purge valves 24a and 24b, the dryer-incorporated supply valve 16, dryer-incorporated return valve 17, local supply valve 7, and local return valve 8 are fully opened, whereby the rotating electrical machine 6 and gas dryer 100 are connected, and the hydrogen gas dehumidifying is restarted.

As a standard for the work of restarting the hydrogen gas dehumidifying, there is no problem with the process described thus far. However, a certain amount of air exists inside the drying tower 1 when the new desiccant 2 is introduced.

Therefore, when it is undesirable that the air remaining in the interior of the drying tower 1 mixes with the hydrogen gas inside the rotating electrical machine 6, the hydrogen gas dehumidifying is restarted in accordance with the following kind of procedure.

That is, after the new desiccant 2 has been introduced, inert gas is supplied from the inert gas cylinder 20 into the drying tower 1 before the dryer-incorporated supply valve 16 and dryer-incorporated return valve 17 are fully opened, the air is purged, and the interior of the drying tower 1 reaches a state of being filled with the inert gas.

Even when hydrogen gas supplied from the rotating electrical machine 6 is introduced into the drying tower 1 by the dryer-incorporated supply valve 16, dryer-incorporated return valve 17, local supply valve 7, and local return valve 8 being fully opened after the purging of the air remaining inside the drying tower 1 is completed, no air remains inside the drying tower 1, a mixed gas of air and hydrogen gas being generated can be avoided, and the rotating electrical machine 6 can be operated safely.

As a process of reactivating the moist desiccant 2 discharged from the drying tower 1 does not need to be carried out in a vicinity of the rotating electrical machine 6, the desiccant 2 can be carried in the receptacle to a place other than a designated explosion-proof area distanced from the rotating electrical machine 6, and the reactivation process carried out.

Further, moisture is removed by a heating process being carried out on the moist desiccant 2, or the like, in an environment in which there is no worry about explosion-proofing, and it goes without saying that the reactivated desiccant 2 can be introduced again into the drying tower 1, and used in dehumidifying the hydrogen gas.

In the first embodiment, as heretofore described, the form of the desiccant holding portion 13 that holds the desiccant 2 is a funnel form in order that the total replacement of the desiccant 2 inside the drying tower 1 is carried out smoothly.

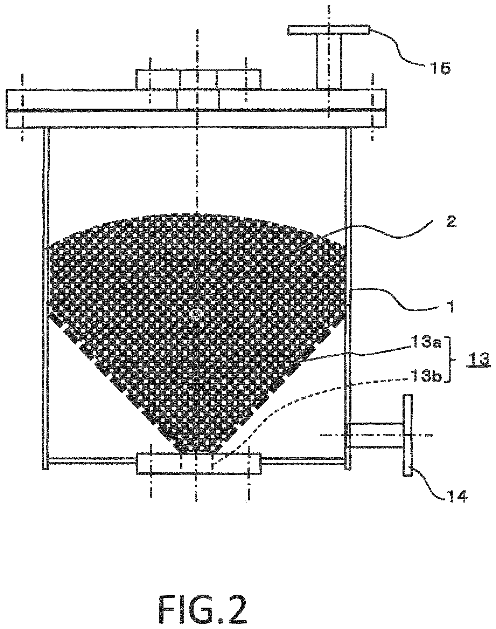

As shown in a main portion sectional side view of the drying tower 1 of the gas dryer 100 in FIG. 2, the drying tower 1 in which the desiccant 2 is disposed is cylindrical, and when the drying tower 1 is installed vertically, an upper end portion of the funnel-form desiccant holding portion 13, which has the greatest diameter, is in a state of peripheral contact with an inner wall of the drying tower 1.

Further, a structure is such that even when the conical interior of the desiccant holding portion 13 is filled by an introduction of the desiccant 2, and furthermore, the desiccant 2 is accumulated to a state of being stacked above the desiccant holding portion 13, the desiccant 2 does not overflow to a lower side from an upper end outer peripheral portion of the funnel form.

Also, a member configuring the desiccant holding portion 13 is a ventilation plate having air permeability, because of which, for example, perforated metal with ventilation resistance of in the region of 50% can be used.

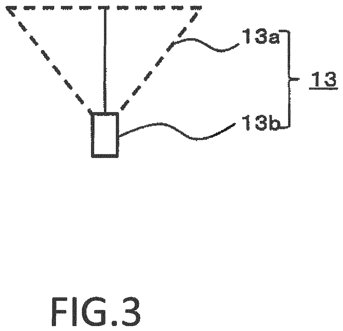

As shown in a sectional side view of the desiccant holding portion 13 in FIG. 3, the desiccant holding portion 13 is configured of perforated metal 13a formed in funnel form, and a holding tube 13b that holds a lower portion of the perforated metal 13a. The desiccant holding portion 13 is locked inside the drying tower 1 by, for example, the holding tube 13b being fixed to a lower end portion of the drying tower 1.

The desiccant holding portion 13 can, for example, be used by being permanently installed in the interior of the drying tower 1.

Further, as shown in FIG. 2, the whole of the interior of the perforated metal 13a, which is a conical portion, is filled with the desiccant 2, and the desiccant 2 is disposed so as to spread over the whole of a cross-section of an inner cylinder of the drying tower 1. Because of this, when the hydrogen gas moves from a lower portion to an upper portion of the drying tower 1, the hydrogen gas passes between particles of the desiccant 2, and dehumidifying of the hydrogen gas is carried out efficiently.

Herein, the particulate desiccant 2 held in the desiccant holding portion 13 passes through the inside of the holding tube 13b, which corresponds to a central spout of the funnel, and is discharged from the discharge valve 26 of the drying tower 1 by naturally dropping downward when the desiccant 2 is replaced, because of which the desiccant replacement work can be advanced smoothly without using a special tool.

Also, in order that the hydrogen gas does not leak into the peripheral atmosphere due to valve switching when switching the operating state of the gas dryer 100, a circuit configuration such that the hydrogen gas in the drying tower 1 can be discharged and purging with an inert gas carried out can be adopted, and the gas dryer 100 can be provided with a high degree of safety by providing duplicate valves in the piping, and the like.

Furthermore, as no heater for dehumidifying the desiccant 2 is disposed inside the gas dryer 100, safety can be secured, and conditions for installation in a designated explosion-proof area, which is particularly restricted under foreign law, can be satisfied.

In the heretofore described example, the form of the drying tower 1 is shown as being cylindrical and the perforated metal of the desiccant holding portion 13 is shown as being conical, but these can be modified. For example, the form of the drying tower 1 can be a form such as a polygonal tube other than a cylinder, together with which the perforated metal 13a can be formed in a polygonal pyramid form, or the like.

It goes without saying that even when the form of the drying tower 1 is changed, the desiccant holding portion 13 can be used as a partitioning plate in the same way by the form of the desiccant holding portion 13 being changed so as to coincide.

Also, the surface area of the funnel-form perforated metal 13a can be increased by protruding portions or depressed portions being partially provided in the conical surface portion. As ventilation can be carried out through aperture portions over the whole of the perforated metal 13a, ventilation improves when the surface area is increased. Also, providing a stripe-form protruding portion or depressed portion in a portion that needs reinforcing is effective in increasing strength.

Also, although the sectional form of the funnel-form perforated metal 13a of the desiccant holding portion 13 shown as an example in FIG. 3 is linear, this can be modified to a structure that promotes the discharge of the desiccant 2, such as a curved cross-section wherein an inclination of an inner wall is steep in the direction in which the desiccant 2 is discharged, within a range that does not impede the discharge of the desiccant 2.

### Second Embodiment

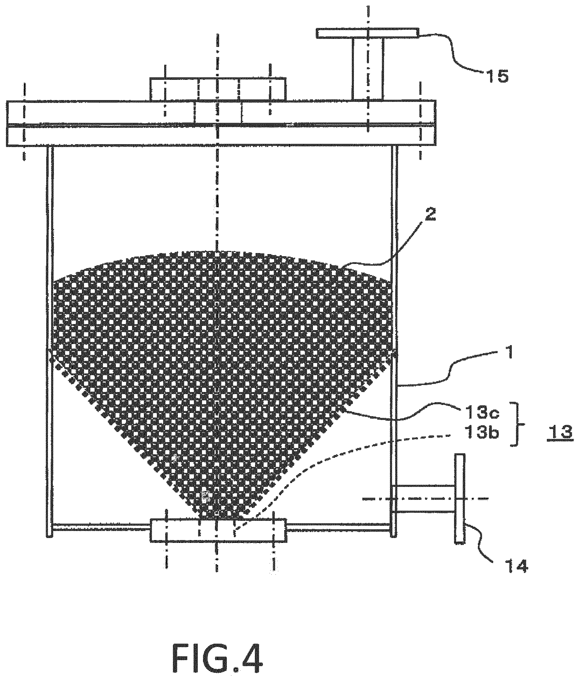

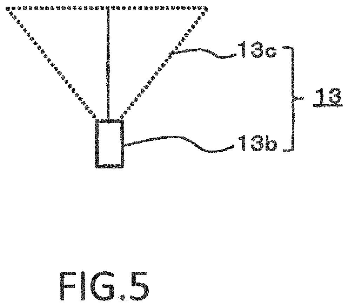

Next, using FIG. 4 and FIG. 5, a second embodiment of the invention will be described. In the first embodiment, an example is given of using the perforated metal 13a with an aperture ratio of, for example, approximately 50 % as a member (ventilation plate) having ventilation that configures the desiccant holding portion 13 for holding the desiccant 2 in the interior of the drying tower 1.

In the second embodiment, however, a description will be given of using a metal net 13c (mesh member), which has an aperture ratio greater than that of the perforated metal 13a, as a ventilation plate in order to reduce the ventilation resistance of the desiccant holding portion 13, as shown in a main portion sectional side view of the drying tower 1 in FIG. 4.

By using the metal net 13c, which is molded into a funnel form, as a component of the desiccant holding portion 13, as shown in FIG. 4 and FIG. 5, the ventilation area can be greater than when using the perforated metal 13a, and the ventilation resistance can be reduced.

Because of this, holding the desiccant 2 by molding a metal net into a conical form results in being able to increase the hydrogen gas flowing into the drying tower 1, and an advantage is obtained in that the time needed for dehumidifying the rotating electrical machine 6 can be shortened.

Disposition of a reinforcement member, such as partially providing a beam for reinforcing the metal net 13c, within a range that does not impede ventilation or the discharge of the desiccant 2 is also advantageous.

### Third Embodiment

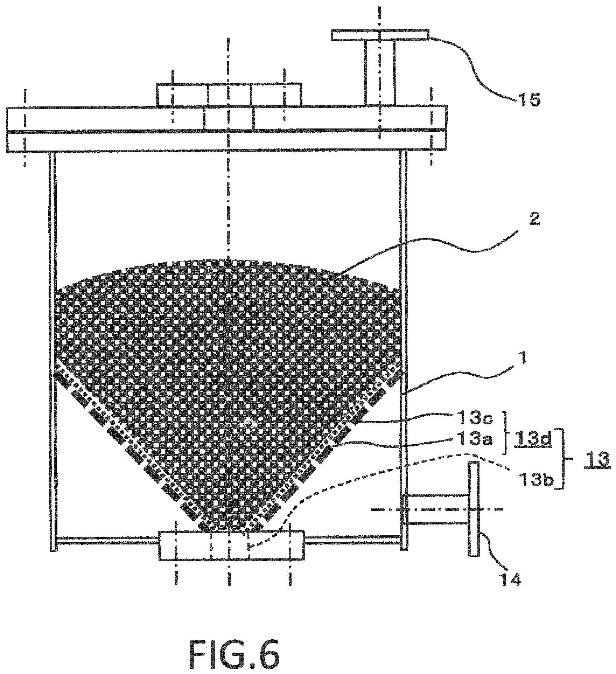

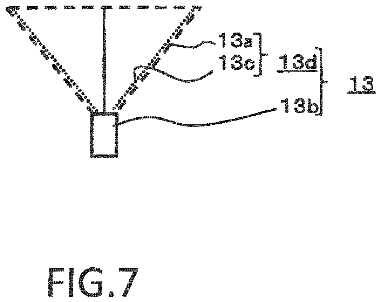

Next, using FIG. 6 and FIG. 7, a third embodiment of the invention will be described. In the first embodiment and second embodiment, an example is given of perforated metal or a metal net being used alone (in a single layer), and being molded into a conical form or the like, as a method of holding the desiccant 2 in the drying tower 1.

Herein, in the third embodiment, a description will be given of an example such that the desiccant holding portion 13 is formed using a duplicate structure funnel-form portion 13d wherein the metal net 13c is disposed on the perforated metal 13a, as shown in a main portion sectional side view of the drying tower 1 in FIG. 6 and a sectional side view of the desiccant holding portion 13 in FIG. 7.

Herein, the perforated metal 13a has an advantage in that strength when forming a receptacle can be sufficiently secured. Also, the metal net 13c has an advantage in that a metal net with a mesh that is smaller than the particles of the desiccant 2 is used, because of which the particles of the desiccant 2 do not catch on the aperture portion (mesh), and when the discharge valve 26 is opened, the particulate desiccant 2 flows smoothly downward over the surface of the metal net in accompaniment to the downward discharge of the desiccant 2, because of which a smooth discharge can be carried out.

Therefore, by the funnel-form portion 13d being formed in a duplicate structure with the perforated metal 13a on an outer side and the metal net 13c on an inner side, as in the third embodiment, the advantages of both the perforated metal 13a and metal net 13c can be utilized.

Also, the duplicate-structure funnel-form portion 13d is such that gaps necessary for ventilation can be formed as appropriate between the perforated metal 13a and metal net 13c, whereby the ventilation efficiency of the desiccant holding portion 13 is actually higher than when the inner side of the perforated metal 13a is filled directly with the desiccant 2, and the efficiency of the hydrogen gas dehumidifying operation can be increased.

### Fourth Embodiment

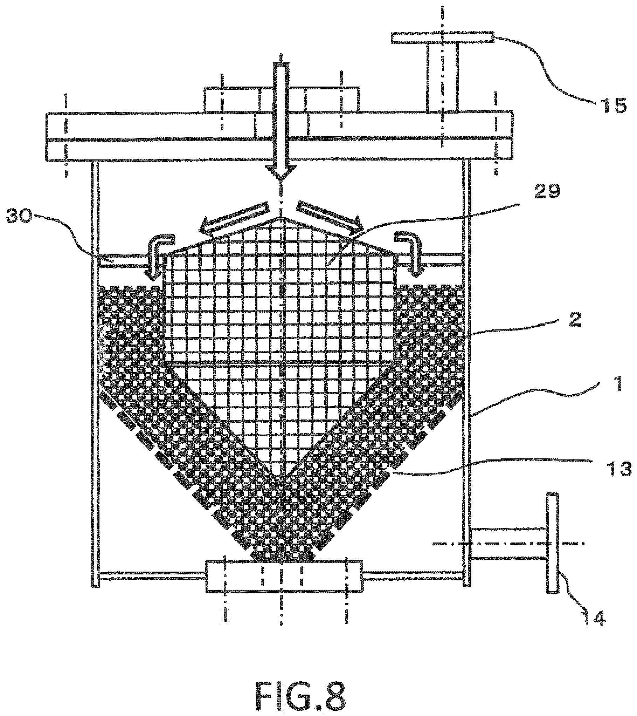

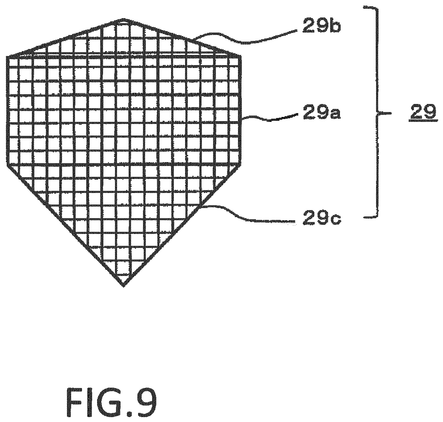

Next, using FIG. 8 and FIG. 9, a fourth embodiment will be described. The first embodiment to third embodiment show that when the desiccant 2 is introduced into the drying tower 1, the desiccant 2 is accumulated in a state of natural drop inside the desiccant holding portion 13.

In this state, however, the accumulated desiccant 2 fills a downward-facing conical portion and is in a state such that a central portion of the desiccant 2 is slightly raised, meaning that the desiccant 2 is such that an amount of accumulated desiccant 2 is greater the nearer to a central portion of the drying tower 1, and the accumulated amount is smaller the nearer to the inner wall of the drying tower 1. When the state of the accumulated desiccant 2 is unbalanced in this way, the hydrogen gas ventilation state may also become unbalanced.

Therefore, in the fourth embodiment, a description will be given of increasing the hydrogen gas dehumidifying efficiency by evening the thickness of the desiccant 2 accumulated inside the desiccant holding portion 13. FIG. 8 is a main portion sectional view of the drying tower 1 showing a state wherein a hollow receptacle 29 necessary for evening the accumulated amount of desiccant 2 is disposed in the interior of the drying tower 1. The hollow receptacle 29 is held in the interior of the drying tower 1 via a support plate 30.

The hollow receptacle 29 can, for example, be used by being permanently installed in the interior of the drying tower 1.

As shown as an example in a sectional side view of the hollow receptacle 29 in FIG. 9, the hollow receptacle 29 is formed so as to be hollow of a plate-form member having ventilation, and is of a form such that a conical portion 29c whose lower portion protrudes downward, a tubular portion 29a connected on top of an outer peripheral end of the conical portion 29c along an axial direction, and a conical upper surface portion 29b connected to an upper end of the tubular portion 29a and protruding centrally upward, are combined. The upper surface portion 29b is formed protruding so that a central portion thereof is higher than an outer peripheral portion.

Herein, the hollow receptacle 29 is held in the interior of the drying tower 1 via the support plate 30 so that a distance between the conical portion 29c of the hollow receptacle 29 and an inner wall of the desiccant holding portion 13 is constant.

When the desiccant 2 is introduced into the drying tower 1, the desiccant 2 introduced from an upper center of the drying tower 1 flows downward in the directions of the arrows from the protruding central portion to the outer peripheral portion of the upper surface portion 29b of the hollow receptacle 29 along the inclination of the upper surface portion 29b, drops to a periphery of the hollow receptacle 29, and is housed on the inner side of the desiccant holding portion 13, as shown in FIG. 8.

Herein, as a distance between the conical portion 29c of the hollow receptacle 29 and the inner wall of the desiccant holding portion 13 is constant, the desiccant 2 can be accumulated to a constant thickness between the hollow receptacle 29 and desiccant holding portion 13, whereby the imbalance in the accumulated state of the desiccant 2 can be improved.

Together with evening the thickness of the desiccant 2 accumulated on the inner side of the desiccant holding portion 13, the hollow receptacle 29 is disposed in a region below the input valve 25 in which the desiccant 2 has heretofore been thickly piled, because of which a hollow can be secured in an interior of the hollow receptacle 29 even after the desiccant 2 is introduced.

The hollow in the interior of the hollow receptacle 29 forms a ventilation region through which the hydrogen gas is caused to pass, and the ventilation of the whole ventilation surface portion of the desiccant holding portion 13 can be evened, because of which the moist hydrogen gas can be caused to come into contact evenly with the whole amount of the desiccant 2, whereby the dehumidifying efficiency can be improved.

### Fifth Embodiment

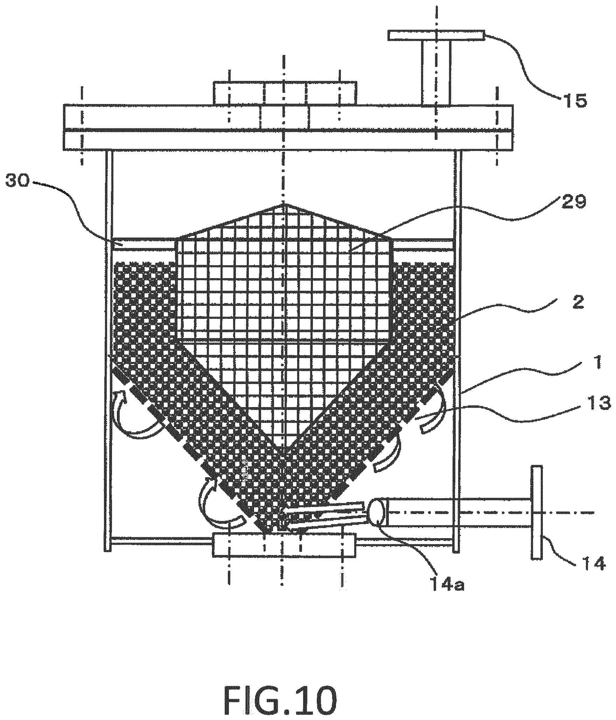

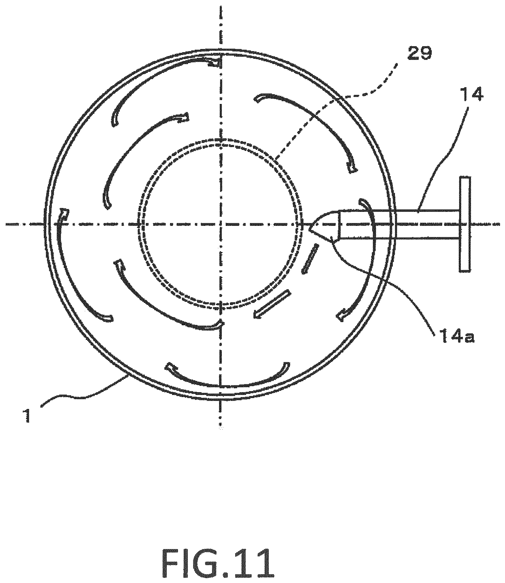

Next, using FIG. 10 and FIG. 11, a fifth embodiment of the invention will be described. In the first embodiment to fourth embodiment, the hydrogen gas that flows into the interior of the drying tower 1 flows in a straight line in the interior of the drying tower 1. As the velocity of the hydrogen gas that flows into the drying tower 1 is a high velocity of around 10 m/s, unevenness may occur in an intensity of the flow of hydrogen gas sprayed against the conical surface of the desiccant holding portion 13.

The desiccant 2 that flows into the interior of the drying tower 1 and is held on the inner side of the desiccant holding portion 13 quickly absorbs a large amount of moisture in a region in which the hydrogen gas flow comes into contact, but the desiccant 2 positioned in a region in which it is difficult for the hydrogen gas flow to come into contact is slow to absorb moisture, meaning that a state of moisture absorption is unbalanced.

In order to improve this, a configuration is such that an orientation of a nozzle 14a attached to a leading end portion of the hydrogen gas inlet pipe 14 is adjusted by bending or the like, and the hydrogen gas flow is in the same direction as a circumferential direction of the inner wall face of the cylindrical drying tower 1, as shown in a main portion sectional side view of the drying tower 1 in FIG. 10.

FIG. 11 shows a sectional view along an axial direction of the drying tower 1, and as shown by a direction in which the hydrogen gas circulates, the hydrogen gas flowing into the drying tower 1 is caused to flow in a circumferential direction of the conical desiccant holding portion 13, whereby the hydrogen gas flows in a whirlpool (spiral) form inside the drying tower 1, and the intensity of the flow of sprayed hydrogen gas can be evened over the whole surface of the conical desiccant holding portion 13.

Further, hydrogen gas that has passed through the layer of desiccant 2, which is of constant thickness, flows to the hydrogen gas outlet pipe 15 side in an upper portion of the drying tower 1, and the hydrogen gas can be caused to come into contact evenly with the whole amount of the desiccant 2, as a result of which the dehumidifying efficiency can be increased.

### Sixth Embodiment

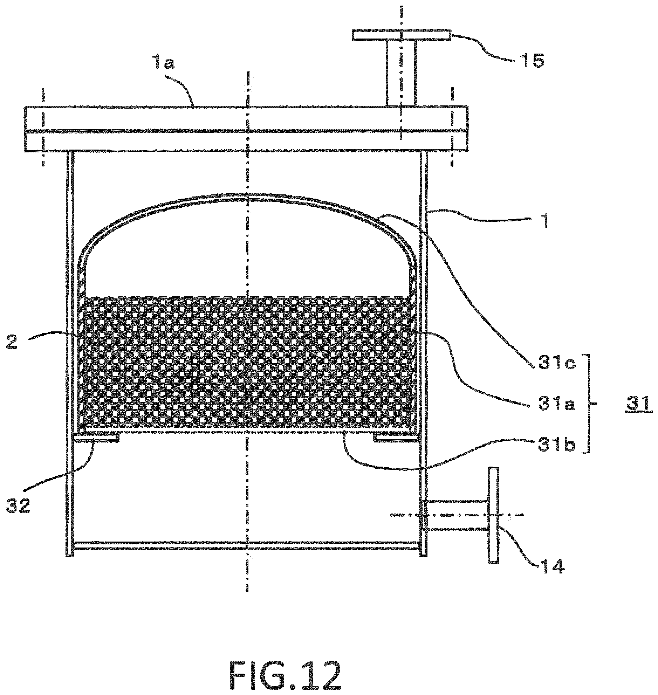

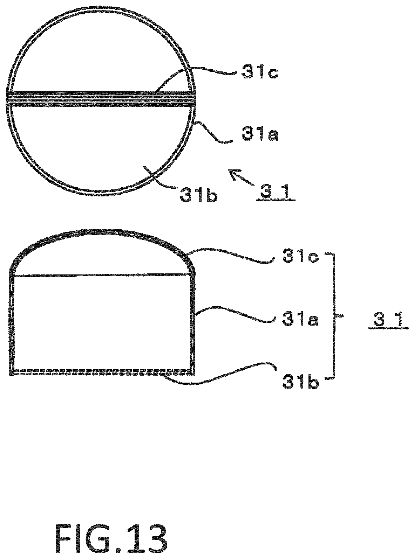

Next, using FIG. 12 and FIG. 13, a sixth embodiment of the invention will be described. In the first embodiment to fifth embodiment, replacement of the desiccant 2 in the drying tower 1 is carried out via the input valve 25 and discharge valve 26 above and below the drying tower 1.

In the sixth embodiment, a handle-equipped desiccant holding receptacle 31 (a basket-form desiccant holding portion) that holds the desiccant 2 is disposed in the interior of the drying tower 1, as shown in a main portion sectional side view of the drying tower 1 in FIG. 12, and replacement of the desiccant 2 is carried out by opening a lid portion 1a provided in an upper portion of the drying tower 1, and removing and inserting the handle-equipped desiccant holding receptacle 31 that holds the desiccant 2.

The desiccant holding receptacle 31 is configured of, for example, a body portion 31a installed along the inner wall of the drying tower 1, a bottom surface portion 31b of a lower end of the body portion 31a formed of a member having ventilation, and a handle portion 31c attached to an upper portion of the body portion 31a, as shown in upper portion and sectional side views of the desiccant holding receptacle 31 in FIG. 13. Perforated metal or the like can be used as the bottom portion 31b.

As shown in FIG. 12, the handle-equipped desiccant holding receptacle 31 can be installed in the interior of the drying tower 1 by being mounted on an edge plate 32 fixed to the inner wall of the drying tower 1. The edge plate 32 is a member that supports an edge of the bottom surface portion 31b of the desiccant holding receptacle 31, and is disposed so as not to impede the ventilation of the hydrogen gas.

By opening the lid portion 1a provided in an upper portion of the drying tower 1 and removing and inserting the desiccant holding receptacle 31 in this way, the whole amount of the desiccant 2 that has absorbed moisture can be replaced in a state housed in the desiccant holding receptacle 31, and workability can be improved.

Specifically, when operating by using one desiccant holding receptacle 31, a total replacement of the desiccant 2 can be carried out by removing moist desiccant from inside the desiccant holding receptacle 31, subsequently inserting new desiccant 2 in the empty desiccant holding receptacle 31, and returning the desiccant holding receptacle 31 to the drying tower 1.

Also, when a multiple of the desiccant holding receptacle 31 can be prepared, work can be carried out by preparing one more desiccant holding receptacle 31 filled in advance with new desiccant 2, and when the desiccant holding receptacle 31 containing moist desiccant 2 is removed from the drying tower 1, immediately positioning the one more desiccant holding receptacle 31 in the drying tower 1.

Also, as the gas dryer 100 in which the desiccant holding receptacle 31 of the sixth embodiment is used is also of a heaterless structure, in the same way as in the first embodiment to fifth embodiment, it goes without saying that the rotating electrical machine 6 can be operated safely, even when installed in a designated explosion-proof area.

Heretofore, a case in which hydrogen gas is used as a coolant gas has been described, but the gas dryer of the invention can also be used when carrying out dehumidifying of another kind of gas, and the advantages can be utilized when carrying out dehumidifying in an environment in which care with respect to fire is needed.

The embodiments can be freely combined, and each embodiment can be modified or abbreviated as appropriate, without departing from the scope of the invention.

## Claims

1. A rotating electrical machine gas dryer, comprising:
- a drying tower into which hydrogen gas circulating in an interior of a rotating electrical machine is conducted and which causes moisture in the hydrogen gas to be adsorbed to a desiccant;
- a funnel-form desiccant holding portion disposed in an interior of the drying tower and holding the desiccant;
- an input valve provided in an upper portion of the drying tower and introducing the desiccant into the desiccant holding portion; and
- a discharge valve provided in a lower portion of the drying tower and discharging the desiccant to an exterior,
wherein the desiccant holding portion is formed of a member having ventilation.

2. The rotating electrical machine gas dryer according to claim 1,
wherein the desiccant holding portion is formed of perforated metal.

3. The rotating electrical machine gas dryer according to claim 1,
wherein the desiccant holding portion is formed of a metal net.

4. The rotating electrical machine gas dryer according to claim 1,
wherein the desiccant holding portion is formed of a duplicate structure member such that a metal net is disposed on an inner side of perforated metal.

5. The rotating electrical machine gas dryer according to any one of claims 1 to 4, comprising a hollow receptacle disposed on an inner side of the desiccant holding portion and having ventilation, wherein the hollow receptacle has a conical portion whose lower portion protrudes downward, the hollow receptacle is held in the interior of the drying tower so that a distance between the conical portion of the hollow receptacle and an inner wall of the desiccant holding portion is constant, and the desiccant of a constant thickness is accumulated between the hollow receptacle and the desiccant holding portion.

6. The rotating electrical machine gas dryer according to claim 5,
wherein an upper surface portion of the hollow receptacle is formed protruding so that a center thereof is higher than an outer peripheral portion, and the desiccant introduced into the center of the upper surface portion from above flows along the upper surface portion into a periphery of the hollow receptacle, and is housed on the inner side of the desiccant holding portion.

7. The rotating electrical machine gas dryer according to any one of claims 1 to 6, comprising a hydrogen gas inlet pipe connected to a lower portion of the drying tower and introducing hydrogen gas into the interior of the drying tower,
wherein an attachment state of the hydrogen gas inlet pipe is adjusted so that a flow of hydrogen gas introduced into the interior of the drying tower is in the same direction as a circumferential direction of an inner wall surface of the cylindrical drying tower.

8. A rotating electrical machine gas dryer, comprising:
- a drying tower into which hydrogen gas circulating in an interior of a rotating electrical machine is conducted and which causes moisture in the hydrogen gas to be adsorbed to a desiccant; and
- a handle-equipped desiccant holding portion disposed in an interior of the drying tower and holding the desiccant,
wherein the desiccant holding portion is formed of a member having ventilation, a lid portion provided in an upper portion of the drying tower is opened, and a removal and insertion of the desiccant holding portion is carried out.
